# EUROPEAN PATENT APPLICATION

(11) **EP 4 653 406 A1**
(43) Date of publication of application: **26.11.2025**
(21) Application number: 24177047.8
(22) Date of filing: 21.05.2024
(51) Int. Cl.: C04B 35/119, C04B 35/626, C04B 35/634, C04B 35/638, C04B 35/64, C04B 37/02

(54) **CERAMIC SUBSTRATE**

(71) Applicant: CeramTec GmbH, 73207 Plochingen (DE)
(72) Inventor: Schreiner, Hans-Jürgen, 91217 Hersbruck (DE); Schicker, Linda, 95659 Arzberg (DE)

(57) **Abstract**

The present invention relates to a ceramic substrate comprising: aluminum oxide (Al₂O₃) with; Zirconium dioxide (ZrO₂) with Yttrium oxide (Y₂O₃) and calcium (Ca), and sodium (Na), and/or yttrium (Y), as well as further components selected from silicon (Si), and/or magnesium (Mg) wherein the ratio of potassium content divided by the calcium content, calculated on the base of their oxide compounds (Na₂O/CaO) is less than 1.0, to ensure an increased temperature cycle stability.

## Description

The present invention relates to a ceramic substrate, a method for obtaining the same and its use.

### Description

Ceramic compositions or substrates are widely used as substrates for mounting electronic components via a metal layer. In this case a ceramic composition acts as an isolating layer on which a metal layer is disposed. An electronic component may then be provided on the metal layer.

Ceramic compositions or substrates used for mounting electronic components are required to have excellent discharge properties, in particular a high coefficient of thermal conductivity. At the same time the ceramic substrate shall have a good mechanical strength as a mounting substrate. This is in particular necessary, when reducing the thickness of the ceramic substrate due to the ongoing miniaturization of electronic components. Therefore, a ceramic substrate is required that have both a high coefficient of thermal conductivity and a high mechanical strength.

A known type of ceramic substrate used in such a set-up is an alumina substrate containing zirconium oxide (zirconia toughened alumina substrate-ZTA substrate).

A ZTA substrate comprising alumina crystal particle(s) and a zirconia crystal particle(s)is for example described in EP 3 786 134 A1 . Among 100% by mass of all components, alumina is provided at 70% by mass or greater and 95% by mass or less and a total of a stabilizer component(s), zirconia (containing Hafnia) is provided at 5% by mass or greater and 30% by mass or less. Said crystal particles comprising an average value of an equivalent circle diameter(s) of the alumina crystal particle(s) is greater than an average value of an equivalent circle diameter(s) of the zirconia crystal particle(s) and is 1.2 µm or greater and 1.9 µm or less. Furthermore, a difference between an equivalent circle diameter at a cumulation of 10% (d10) and an equivalent circle diameter at a cumulation of 90% (d90) in a cumulative distribution of an equivalent circle diameter(s) of the alumina crystal particle(s) is 1.5 µm or greater and 2.5 µm or less.

A ceramic substrate satisfying such a configuration is providing both, a high thermal conductivity and a high mechanical strength.

Thus, the object of the present invention was to provide a ceramic ZTA substrate having good mechanical properties like a high thermal conductivity and/or a good mechanical strength in combination with a good adhesion with the metal layer disposed on the ceramic surface, providing a long lifetime of the metalized ZTA substrate in use.

This object was solved by the ceramic substrate according to claim 1.

Accordingly, a ceramic substrate is provided that comprises:
- 70 wt% or more (based on the overall weight of the ceramic substrate) of aluminum oxide (Al₂O₃),
- Up to 30 wt% (based on the overall weight of the ceramic substrate) of zirconium dioxide (ZrO₂)
- Containing further elements selected from calcium (Ca), and sodium (Na), and/or yttrium (Y), and/or silicon (Si), and/or magnesium (Mg),
- wherein the ratio of sodium content divided by the calcium content, calculated on the base of their oxide compounds (Na₂O/CaO) is less than 1.0, preferably less than 0.8, more preferably less than 0.3.

A ceramic substrate with this composition has a surprisingly good temperature cycle stability when metallized e.g., via DCB. Values measured between -55°C and +150°C show a temperature cycle stability of > 100% compared to the temperature cycle stability of the comparative example, preferably > 125% compared to the temperature cycle stability of the comparative example, more preferably > 150% compared to the temperature cycle stability of the comparative example. A larger number of temperature cycle stability leads to a longer lifetime of the ceramic substrate, or the electronic component made with the metallized ceramic substrate respectively.

In a further embodiment of the present invention, the ceramic substrate comprises (wt% are based on the overall weight of the ceramic substrate):
- 5-95 wt%, preferably 88-93 wt%, more preferably 89-91 wt% of aluminum oxide
- 4-14 wt%, preferably 6-11 wt%, more preferably 8-10 wt% of zirconium dioxide (ZrO₂).

In a further embodiment of the present invention, the ceramic substrate comprises (wt% are based on the overall weight of the ceramic substrate):
- 0.2-0.8 wt%, preferably 0.3-0.7 wt%, more preferably 0.4-0.6 wt% of yttrium, calculated as sesquioxide (Y₂O₃) and/or
- 1.0-0.01 wt%, preferably 0.5-0.02 wt%, more preferably 0.2-0.03 wt% of calcium, calculated as calcium oxide (CaO).

In a further preferred embodiment of the present invention, the ceramic substrate comprises (wt% are based on the overall weight of the ceramic substrate):
- 0.2-0.8 wt%, preferably 0.3-0.7 wt%, more preferably 0.4-0.6 wt% of yttrium, calculated as sesquioxide (Y₂O₃) and
- 1.0-0.01 wt%, preferably 0.5-0.02 wt%, more preferably 0.2-0.03 wt% of calcium, calculated as calcium oxide (CaO).

In a further embodiment of the present invention, the ceramic substrate comprises (wt% are based on the overall weight of the ceramic substrate):
- 0.1-0.5 wt%, preferably 0.2-0.4 wt%, more preferably 0.25-0.35 wt%, of silicon, calculated as silicon dioxide (SiO₂) and/or
- less than 0.03 wt%, preferably less than 0.02 wt%, more preferably less than 0.01 wt% of sodium, calculated as sodium oxide (Na₂O),

In a further preferred embodiment of the present invention, the ceramic substrate comprises (wt% are based on the overall weight of the ceramic substrate):
- 0.1-0.5 wt%, preferably 0.2-0.4 wt%, more preferably 0.25-0.35 wt%, of silicon, calculated as silicon dioxide (SiO₂) and
- less than 0.03 wt%, preferably less than 0.02 wt%, more preferably less than 0.01 wt% of sodium, calculated as sodium oxide (Na₂O),

In a further embodiment of the present invention, the ceramic substrate comprises:
- A ratio of calcium content divided by the yttrium content, calculated on the base of their oxide compounds (CaO/Y₂O₃) greater than 0.08, preferably greater than 0.09, more preferably greater than 0.1.

In a further embodiment of the present invention, the ceramic substrate comprises:
- A ratio of silicon content divided by the sodium content, calculated on the base of their oxide compounds (SiO₂/Na₂O) greater than 10, preferably greater than 15, more preferably greater than 20.

In a further embodiment of the present invention, the ceramic substrate comprises:
- A ratio of silicon content divided by the calcium content, calculated on the base of their oxide compounds (SiO₂/CaO) of less than 10, preferably less than 8, more preferably less than 7.

In a further embodiment of the present invention, the ceramic substrate comprises:
- A ratio of sodium content divided by the yttrium content, calculated on the base of their oxide compounds (Na₂O/Y₂O₃) less than 0.07, preferably less than 0.05, more preferably less than 0.03.

In another further embodiment of the present invention, the ceramic substrate comprises:
- a ratio of potassium content divided by the calcium content, calculated on the base of their oxide compounds (Na₂O/CaO) is less than 1.0, preferably less than 0.8, more preferably less than 0.3.
- A ratio of calcium content divided by the yttrium content, calculated on the base of their oxide compounds (CaO/Y₂O₃) greater than 0.08, preferably greater than 0.09, more preferably greater than 0.1 and
- A ratio of silicon content divided by the sodium content, calculated on the base of their oxide compounds (SiO₂/Na₂O) greater than 10, preferably greater than 15, more preferably greater than 20 and
- A ratio of silicon content divided by the calcium content, calculated on the base of their oxide compounds (SiO₂/CaO) of less than 10, preferably less than 8, more preferably less than 7 and
- A ratio of sodium content divided by the yttrium content, calculated on the base of their oxide compounds (Na₂O/Y₂O₃) less than 0.07, preferably less than 0.05, more preferably less than 0.03.

The ceramic substrate of the invention is characterized by a good thermal stability and a good mechanical strength as illustrated by the data provided below.

The ceramic substrate of the present invention is further characterized by a surface roughness of less than 0.5 µm, preferably of less than 0.4 µm, more preferably of less than 0.2 µm, such as 0.19 µm. The surface roughness is further enhancing the bonding of the metal layer and thus improves the temperature cycle stability as well as the mechanical stability of the formed electronic compound.

The present ceramic substrate has a dense crystal arrangement and consists of two crystalline phases of ZrO₂ and Al₂O₃ grains. The ZrO₂ grains are tetragonal or monoclinic, preferably more than 50 % providing the tetragonal crystal structure when measured by XRD and evaluated by Riethveld refinement method.

Yttrium oxide is contained in commercially available zirconium oxide as stabilizer. Besides yttrium oxide, commercially available Zirconium oxide also contains hafnium oxide HfO₂. HfO₂ may be present within a range of not less than 1 part by mass and not greater than 3 part by mass per 100 parts of zirconium oxide. Yttrium oxide may be present in zirconium oxide in an amount of up to 6 wt%, preferably about 5-5.5 wt%. Preferably 2,5-3,5 mol%, more preferably 3 mol% of Y₂O₃ act as a stabilizer for ZrO₂ (Based on the amount of the ZrO₂). Commercially Zirconium oxide also contains further components such as up to 0.55 wt% aluminum oxide Al₂O₃.

The ceramic substrate of the present invention also contains sintering agents, in particular silicon dioxide (SiO2) and a calcium compound, preferably an oxide containing calcium compound, more preferably a compound chosen from the list of CaO and/or CaCO₃, and/or Ca(OH)₂, or a mixture thereof, in particular preferably CaCO₃ In a preferred embodiment of the present invention, the SiO₂ is added in an amount up to 0.5 wt%, preferably up to 0,4 wt%, more preferably up to 0.35 wt%. The SiO2 is preferably having a specific surface area when measured and evaluated with BET method between 10-100 m²/g, preferably between 30-70 m²/g and a purity of SiO₂ of > 96 wt%, preferably >99 wt%
The calcium compound added in a preferred embodiment of the present invention is provided in an amount up to 1.8 wt%, preferably up to 0.9 wt%, more preferably up to 0.36 wt%, and preferably having a particle size d50 between 0.1 and 1.2 µm, preferably d50 0.2-0.75 µm and a purity of CaCO₃ of > 95%, preferably >98%
The ceramic substrate of the present invention also comprises further chemical elements like sodium and/or magnesium. These further chemical elements can be derived from the other ingredients like aluminium oxide, zirconium oxide, silicon dioxide, CaO and/or CaCO₃ as contamination, and/or may be added as raw material to the raw material mixture.

In a preferred embodiment of the present invention, the contamination content of sodium is known for the inorganic raw material compounds and content ratios of Na₂O/CaO and/or SiO₂/Na₂O areadjusted by the amount of added calcium compound and/or silicon dioxide.

In an embodiment the ceramic substrate has a bending strength (measured according to ASTM C1499-15) of more than 620 MPa, preferably of more than 650 MPa.

In another embodiment the ceramic substrate has a thermal conductivity (measured at 20°C according to ISO 18755:2005) of more than 20 W/m*K, preferably of more than 22 W/m*K, even more preferably of more than 24 W/m*K. The thermal conductivity may be in a range between 20 - 40 W/m*K, preferably between 21- 35 W/m*K, more preferably between 22- 30 W/m*K.

A ZTA ceramic substrate has a modulus of elasticity or E-module (Young's Modulus) as determined in a Grindosonic (method described in the experimental section) of more than 310 GPa, preferably of more than 350 GPa, even more preferably of more than 360 GPa. The E-module may be in a range between 310 - 400 GPa, preferably in a range between 330 - 390 GPa, more preferably in a range between 350 - 380 GPa.

It is furthermore preferred, if the ceramic substrate has a fracture toughness K_{lc} Niihara (measured according to the IF-method as described in the experimental section) of 3-5 MPa m^{1/2}, preferably of 3.5 - 4.5 MPa m^{1/2}, more preferably of 3.8-4.2 MPa m^{1/2}. The Vickers Hardness of the ceramic substrate is between 1500 - 2000 HV, preferably between 1600 - 1900 HV, more preferably between 1700 - 1850 HV, even more preferably between 1750 - 1830 HV.

It is also preferred, if the ceramic substrate has a surface roughness Ra (measured according to DIN EN ISO 4288) of less than 0.5 µm, preferably of less than 0.4 µm, more preferably of less than 0.2 µm, such as 0.19 µm.

The bulk density (measured according to DIN 993-1 / ISO 18754) of the ceramic substrate is more than 3.5 g/cm³, preferably of more than 3.95 g/cm3, even more preferably of more than 4 g/cm³, such as 4.0-4.1 g/cm³.

In another embodiment the ceramic substrate has an electric breakdown strength (measured at 20°C following DIN EN 60243 ff) of more than 20 kV/mm, preferably of more than 25 kV/mm. more preferably of more than 30 kV/mm. The electric breakdown strength may be in a range between 20 - 40 kV/mm, preferably in a range between 25 - 35 kV/mm, more preferably between 28 - 33 kV/mm.

The ceramic substrate may be obtained in a method comprising the following steps:
- Providing at least one type of aluminum oxide having a particle size between d50 0.1-1.7 µm, preferably d50 0.3-1.5 µm,
- Providing at least one type of zirconium oxide having a particle size between d50 0.2-1.4 µm, preferably d50 0.25-1.25 µm,
- Providing a silicon dioxide having a specific surface area when measured and evaluated with BET method between 10-100 m²/g, preferably between 30-70 m²/g and a purity of SiO₂ of > 96 wt%, preferably >99 wt%,
- Providing a calcium compound like CaO and/or CaCO₃ wherein the ratio of sodium content divided by the calcium content in the sintered ceramic substrate, calculated on the base of their oxide compounds (Na₂O/CaO) is less than 1.0, preferably less than 0.8, more preferably less than 0.3,
- Combining the aluminum oxide and the zirconium oxide and the silicon oxide and the calcium compound and dispersing the mixture in a mill,
- Milling the mixture of the aluminum oxide and the zirconium oxide and the silicon oxide and the calcium compound to a difference in grain size distribution d90-d10 between 1.70 and 2.20 µm, preferably between 1.75 and 2.15 µm, more preferably between 1.80 and 2.10 µm, a difference in grain size distribution d50-d10 between 0.50 and 0.80 µm, preferably between 0.55 and 0.75 µm, more preferably between 0.60 and 0.70 µm and a difference in grain size distribution d90-d50 between 1.10 and 1.60 µm, preferably between 1.15 and 1.55 µm, more preferably between 1.20 and 1.50 µm,
- Adding a binder, such as polyvinylalcohol (PVA) or polyvinylbutyral (PVB), to the dispersed mixture of aluminum oxide and zirconium oxide,
- Shaping the dispersed mixture of aluminum oxide, zirconium oxide, silicon dioxide, calcium compound and binder into a desired form, preferred into a sheet or plate like form and
- Debinding and sintering the desired form by at least one heat treatment to provide the ceramic substrate.

The ceramic substrate may also be obtained in a method comprising the following steps:
- Providing a mixture of at least one first type of aluminum oxide having a particle size between d50 0.1-0.8 µm, preferably d50 0.3-0.6 µm and at least one second type of aluminum oxide having a particle size between d50 0.9-1.7 µm, preferably 1.0-1.5 µm,
- Providing a mixture of at least one first type of zirconium oxide having a particle size between d50 0.2-0.5 µm preferably d50 0.25-0.35; and at least one second type of zirconium oxide having a particle size between d50 0.8-1.4 µm, preferably d50 0.9-1.25 µm,
- Providing a silicon dioxide having a specific surface area when measured and evaluated with BET method between 10-100 m²/g, preferably between 30-70 m²/g and a purity of SiO₂ of > 96 wt%, preferably >99 wt%,
- Providing a calcium compound like CaO and/or CaCO₃ wherein the ratio of sodium content of the raw material mixture divided by the calcium content of the raw material mixture, calculated on the base of their oxide compounds (Na₂O/CaO) is less than 1.0, preferably less than 0.8, more preferably less than 0.3,
- Combining the aluminum oxide and the zirconium oxide and the silicon dioxide and the calcium compound and dispersing the mixture in a mill,
- Milling the mixture of the aluminum oxide and the zirconium oxide and the silicon oxide and the calcium compound to a difference in grain size distribution d90-d10 between 1.70 and 2.20 µm, preferably between 1.75 and 2.15 µm, more preferably between 1.80 and 2.10 µm, a difference in grain size distribution d50-d10 between 0.50 and 0.80 µm, preferably between 0.55 and 0.75 µm, more preferably between 0.60 and 0.70 µm and a difference in grain size distribution d90-d50 between 1.10 and 1.60 µm, preferably between 1.15 and 1.55 µm, more preferably between 1.20 and 1.50 µm,
- Adding a binder, such as polyvinylalcohol (PVA) or polyvinylbutyral (PVB), to the dispersed mixture of aluminum oxide and zirconium oxide,
- Shaping the dispersed mixture of aluminum oxide, zirconium oxide, silicon dioxide, calcium compound and binder into a desired form, preferably into a sheet or plate like form and
- Debinding and sintering the desired form by at least one heat treatment to provide the ceramic substrate.

In an embodiment of the present method, the at least one grade of aluminum oxide may have a particle size between d50 0.1-1.7 µm, preferably d50 0.3-1.5 µm, and d90 less than 4.0, preferably less than 3.6 µm.

In another embodiment of the present method, the at least one type of zirconium oxide having a particle size between d50 0.2-1.4 µm, preferably d50 0.25-1.25 µm.
the first grade of Al₂O₃ may have a particle size d50 of 0.3-0.6 µm and d90 of less than 3.0, preferably less than 2.0 µm and the second grade of Al₂O₃ may have a particle size d50 of 1.0-1.5 µm and d90 of less than 4.0, preferably less than 3.6 µm.

In another embodiment of the present method, the first grade of Al₂O₃ may have a particle size d50 of 0.3-0.6 µm and d90 of less than 3.0, preferably less than 2.0 µm and the second grade of Al₂O₃ may have a particle size d50 of 1.0-1.5 µm and d90 of less than 4.0, preferably less than 3.6 µm.

In another embodiment of the present method, the first grade of ZrO₂ may have a particle size d50 of 0.25-0.35 µm and d98 less than 2.0 µm and the second grade of ZrO₂ may have a particle size d50 of 0.9-1.25 µm, and d80 1.5-2.2 µm.

In an embodiment of the present method, the following mixture is provided as aluminum oxide starting material:
- 42.5 - 47.5 wt%, preferably 44 - 46.5 wt%, more preferably 44.5- 45.5 wt% of the at least one first type of aluminum oxide having a particle size between d50 0.1-0.8 µm, preferably d50 0.3-0.6 µm and
- 42.5 - 47.5 wt%, preferably 44 - 46.5 wt%, more preferably 44.5- 45.5 wt% of the at least one second type of aluminum oxide having a particle size between d50 0.9-1.7 µm, preferably 1.0-1.5 µm.

Thus, the two types of aluminum oxides having preferably different particle sizes and used as starting material are provided in a weight ratio of about 1:1, i.e. about 50 wt% of each type.

In another embodiment of the present method, the following mixture is provided as zirconium oxide starting material:
- 1.2 - 4.2 wt%, 1.8 - 3.3 wt%, 2.4 -3 wt% of the at least one first type of zirconium oxide having a particle size between d50 0,.2-0.5 µm preferably d50 0.25-0.35 µm and
- 2.8 - 9.8 wt%, 4.2 - 7.7 wt%, 5.6 - 7 wt% of the at least one second type of zirconium oxide having a particle size between d50 0.8-1.4 µm, preferably d50 0.9-1.25 µm.

Thus, preferably about 30 wt % of at least one first type of zirconium oxide having a particle size between d50 0.2-0.5 µm preferably d50 0.25-0.35 µm and about 70 wt% at least one second type of zirconium oxide having a particle size between d50 0.8-1.4 µm, preferably d50 0.9-1.25 µm are used as starting material.

In a further embodiment of the present method sintering aids such as silicon dioxide (SiO₂) and/or a calcium compound such as CaO and/or CaCO₃ and organic compounds such as binder (for example PVA or PVB) are added to the Al₂O₃ / ZrO₂ mixture.

The powdery mixture of Al₂O₃ / ZrO₂ (containing Y₂O₃) / sintering aids is subsequently added into a mill together with a solvent such as water or organic solvents, preferably containing a dispersing agent to obtain a dispersion.

The dispersion comprising the aluminum oxide, the zirconium oxide, the silicon oxide, the calcium and a solvent is milled to a difference in grain size distribution d90-d10 between 1.70 and 2.20 µm, preferably between 1.75 and 2.15 µm, more preferably between 1.80 and 2.10 µm, a difference in grain size distribution d50-d10 between 0.50 and 0.80 µm, preferably between 0.55 and 0.75 µm, more preferably between 0.60 and 0.70 µm and a difference in grain size distribution d50-d50 between 1.10 and 1.60 µm, preferably between 1.15 and 1.55 µm, more preferably between 1.20 and 1.50 µm.

In a next step, a green sheet is obtained by a doctor blade method using this slurry. Alternatively, using a granulated body prepared by spray-drying the slurry using a spray dryer, a green sheet is obtained by a powder press molding method or a roller compaction method.

Next, a compact may be obtained by performing profile shape machining with a metal mold or a laser. The green sheet may be used directly as a compact and subjected to profile shape machining with a laser after being subject to firing. In addition, taking into consideration mass productivity, a multipiece compact is preferably used.

The sintering step is carried out in a furnace. The sintering temperature is preferably 1400-1700°C.

The ceramic substrate of the invention may be used in an electronic device. Such an electronic device may include the ceramic substrate as a support with a metal layer located on one or both surfaces of the ceramic substrate. An electronic component may be provided on the metal layer.

The electronic component provided on the metal layer of the ceramic substrate may be used, for example, in a semiconductor element such as an insulated gate bipolar transistor (IGBT) element, an intelligent power module (IPM) element, a metal oxide semiconductor field effect transistor (MOSFET) element, an LED element, a freewheeling diode (FWD) element, a giant transistor (GTR) element, or a Schottky barrier diode (SBD). In addition, the electronic component may be used in a heat-generating element for a sublimation type thermal printer head or a thermal inkjet printer head. Further, the electronic component may be used in a Peltier element.

The invention is now explained in more detail with reference to the examples.

The following Examples are included to demonstrate certain aspects and embodiments of the invention as described in the claims. It should be appreciated by those of skill in the art, however, that the following description is illustrative only and should not be taken in any way as a restriction of the invention.

### I. Synthesis

The starting materials ZrO₂, Al₂O₃, calcium compound and SiO₂ are subjected to an incoming raw material inspection. At least one grade is used for both the Al₂O₃ and the ZrO₂ to control the grain size distributions shown in the final product.

The mass preparation (slurry) takes place in a mill. The mass preparation contains mixing of the raw materials, meaning the ceramic starting material and the organic compounds. The slurry is cast to form a ceramic green film. The green film is cut to specified dimensions. The ceramic films are sintered at 1400 bis 1700°C.

### II. Analytics

### Grain size: planimetric method applied to the sintered ceramic substrate

The planimetric method applied for determining the average crystal grain size of alumina and zirconia is now described. First, the surface of the ceramic substrate 1 is subjected to mirror finishing and is heat-treated in a temperature range from 50 to 100°C lower than the firing temperature. The heat-treated surface is then used as a measurement surface and is photographed at a multiplication factor of 5000 times using an SEM. Next, the photographed image data is analyzed using image analysis software (for example, Win ROOF available from the Mitani Corporation). As a result, the data for the respective crystal grain sizes of alumina and zirconia present in the image data can be obtained.

Although the ceramic substrate may contain crystals with a crystal grain size of less than 0.05 mm, only crystals with a crystal grain size of at least 0.05 mm are targeted in the analysis by the image analysis software. In addition, when image analysis software such as that described above is used, separate measurements are possible because there is a difference in color tone between alumina crystal grains and zirconia crystal grains.

The average value of an equivalent circle diameter of each crystal grain calculated from the area of each crystal grain of alumina is the average crystal grain size of alumina, and the average value of an equivalent circle diameter of each crystal grain calculated from the area of each crystal grain of zirconia is the average crystal grain size of zirconia.

The standard deviation of the crystal grain size of alumina can be determined by the same method as that used to determine the average crystal grain size described above from the data of the crystal grain size of alumina obtained using image analysis software.

Table 1 summarizes the chemical analyses, certain ratios of chemical compounds, mechanical, thermal and electrical properties of a comparative example (CE) and an inventive example (IE).

**Table 1 chemical, mechanical, thermal and electrical properties of a comparative example (CE) and an inventive example (IE).**

| | | **Condition** | **Unit** | **CE** | **IE** |
|---|---|---|---|---|---|
| Bulk density | | 25 °C | g/cm3 | 4,05 | 4,04 |
| Chemical analysis | Al₂O₃ | | wt% | 90.0 | 90.2 |
| | ZrO2 | | wt% | 9.1 | 9.0 |
| | CaO | | wt% | 0.02 | 0.05 |
| | Na2O | | wt% | 0.02 | 0.01 |
| | Y2O3 | | wt% | 0.50 | 0.48 |
| | SiO2 | | wt% | 0.31 | 0.26 |
| | MgO | | wt% | 0.07 | 0.07 |
| Content ratio | Na2O/CaO | | - | 1.0 | 0.2 |
| | CaO/Y2O3 | | - | 0.047 | 0.104 |
| | SiO2/CaO | | - | 14.1 | 5.2 |
| | SiO2/Na2O | | - | 14.1 | 26 |
| | Na2O/Y2O3 | | - | 0.047 | 0.021 |
| Surface roughness Ra | | 25 °C | µm | <0.2 | <0.2 |
| Mechanial | Bending strenght | 25 °C | MPa | 650 | 651 |
| HV | Hardness | 25 °C | kV/mm | 26 | 31 |
| Thermal | Thermal conductivity | 25 °C | W/(m·K) | >24 | >24 |
| | thermal cycling stability | DCB -55°C to +150°C | % | 100 | 155 |
| Electrical | Breakdown strength | DC | kV/mm | >30 | >30 |

As can be seen in Table 1, bending strength reaches a high value of over 650 MPa, while the thermal conductivity is > 24 W/(m*K). Thus, the inventive example combines both an excellent mechanical strength and a good thermal conductivity.

Furthermore, the inventive example shows a high temperature cycling stability in temperature cycling test. All examples are metallized by a direct copper bonding (DCB) where a copper plate is directly bonded to the ZTA-substrate surface. Afterwards both examples are cycled between -55°C and +150°C before the metal layer is delaminating from the substrate.

The temperature cycling stability of the inventive example is 55 % higher compared to the temperature cycling stability of the comparative example as can be seen in table 1. This improvement is caused by the adjusted content ratios of the inventive example as shown in table 1.

## Claims

1. A ceramic substrate comprising:
- 70 wt% or more (based on the overall weight of the ceramic substrate) of aluminum oxide (Al₂O₃),
- Up to 30 wt% (based on the overall weight of the ceramic substrate) of zirconium dioxide (ZrO₂)
- Containing calcium (Ca), and sodium (Na), yttrium (Y)
- containing further elements silicon (Si), and/or magnesium (Mg),
- wherein the ratio of potassium content divided by the calcium content, calculated on the base of their oxide compounds (Na₂O/CaO) is less than 1.0, preferably less than 0.8, more preferably less than 0.3.

2. Ceramic substrate according to claim 1, comprising
- 5-95 wt%, preferably 88- 93 wt%, more preferably 89-91 wt% (based on the overall weight of the ceramic substrate) of aluminum oxide (Al₂O₃),
- 4-14 wt%, preferably 6-11 wt%, more preferably 8-10 wt% (based on the overall weight of the ceramic substrate) of zirconium dioxide (ZrO₂).

3. Ceramic substrate according to one of the preceding claims, comprising
- 0.2-0.8 wt%, preferably 0.3-0.7 wt%, more preferably 0.4-0.6 wt% (based on the overall weight of the ceramic substrate) of yttrium, calculated as sesquioxide (Y₂O₃),
- 1.0-0.01 wt%, preferably 0.5-0.02 wt%, more preferably 0.2-0.03 wt% (based on the overall weight of the ceramic substrate) of calcium, calculated as calcium oxide (CaO),

4. Ceramic substrate according to one of the preceding claims, comprising
0.1-0.5 wt%, preferably 0.2-0.4 wt%, more preferably 0.25-0.35 wt% (based on the overall weight of the ceramic substrate) of silicon, calculated as silicon dioxide (SiO₂),
- Less than 0.03 wt%, preferably less than 0.02 wt%, more preferably less than 0.01 wt% (based on the overall weight of the ceramic substrate) of sodium, calculated as sodium oxide (Na₂O),

5. Ceramic substrate according to one of the preceding claims, comprising A ratio of calcium content divided by the yttrium content, calculated on the base of their oxide compounds (CaO/Y₂O₃) greater than 0.08, preferably greater than 0.09, more preferably greater than 0.1.

6. Ceramic substrate according to one of the preceding claims, **characterized by** a ratio of silicon content divided by the sodium content, calculated on the base of their oxide compounds (SiO₂/Na₂O) greater than 10, preferably greater than 15, more preferably greater than 20.

7. Ceramic substrate according to one of the preceding claims, **characterized by** a ratio of silicon content divided by the calcium content, calculated on the base of their oxide compounds (SiO₂/CaO) of less than 10, preferably less than 8, more preferably less than 7.

8. Ceramic substrate according to one of the preceding claims, **characterized by** a ratio of sodium content divided by the yttrium content, calculated on the base of their oxide compounds (Na₂O/Y₂O₃) less than 0.07, preferably less than 0.05, more preferably less than 0.03.

9. Ceramic substrate according to one of the preceding claims **characterized by** a bending strength (measured according to ASTM C1499-15) of more than 620 MPa, preferably of more than 650 MPa.

10. Ceramic substrate according to one of the preceding claims **characterized by** a thermal conductivity (measured at 20°C according to ISO 18755:2005) of more than 20 W/m*K, preferably of more than 22 W/m*K, even more preferably of at least 24 W/m*K.

11. Ceramic substrate according to one of the preceding claims **characterized by** a surface roughness Ra (measured according to DIN EN ISO 4288) of less than 0.5 µm, preferably of less than 0.4 µm, more preferably of less than 0.2 µm.

12. Method for obtaining a ceramic substrate according to one of the preceding claims comprising the following steps
- Providing at least one type of aluminum oxide
- Providing at least one type of zirconium oxide
- Providing a silicon dioxide
- Providing a calcium compound like CaO and/or CaCO₃ wherein the ratio of sodium content of the raw material mixture divided by the calcium content of the raw material mixture, calculated on the base of their oxide compounds (Na₂O/CaO) is less than 1.0, preferably less than 0.8, more preferably less than 0.3
- Combining the aluminum oxide and the zirconium oxide and the silicon oxide and the calcium compound and dispersing the mixture in a mill,
- Milling the mixture of the aluminum oxide and the zirconium oxide and the silicon oxide and the calcium compound
- Adding a binder to the dispersed and milled mixture
- Shaping the dispersed mixture and binder into a desired form, and
- Sintering the molded mixture to provide the ceramic substrate.

13. Method for obtaining a ceramic substrate according to claim 13 wherein a mixture of at least one first type of aluminum oxide having a particle size d50 between 0.1-0.8 µm, preferably d50 0.3-0.6 µm and at least one second type of aluminum oxide having a particle size d50 between 0.9-1.7 µm, preferably 1.0-1.5 µm and/or a mixture of at least one first type of zirconium oxide having a particle size d50 between 0.2-0.5 µm preferably d50 0.25-0.35 µm and at least one second type of zirconium oxide having a particle size d50 between 0.8-1.4 µm, preferably d50 0.9-1.25 µm is provided.

14. Method for obtaining a ceramic substrate according to claim 13-14 wherein a silicon dioxide having a particle size d50 between 0.1-1.5 µm, preferably d50 0.2-0.8 µm and/or a calcium compound like CaO and/or CaCO₃ having a particle size d50 between 0.1-1.2 µm, preferably d50 0.2-0.75 µm is provided.

15. Method for obtaining a ceramic substrate according to claim 13-14 wherein the dispersed mixture and binder is shaped into a desired form by tape casting.
